# EUROPÄISCHE PATENTSCHRIFT

(11) **EP 1 420 126 B1**
(45) Veröffentlichungstag und Bekanntmachung des Hinweises auf die Patenterteilung: **11.11.2015**
(21) Anmeldenummer: 03021069.4
(22) Anmeldetag: 18.09.2003
(51) Int. Cl.: E04F 15/02, E04F 15/04, B44C 5/04

(54) **Holzfaserplatte, insbesondere Fussbodenpaneel**
Wood-fiber-board, in particular flooring panel
Plaque en fibres de bois, notamment panneau de plancher

(30) Priorität: 12.11.2002 DE 10252863
(43) Veröffentlichungstag der Anmeldung: 19.05.2004
(60) Teilanmeldung: 15002203.6
(73) Patentinhaber: Kronotec AG, 6006 Luzern (CH)
(72) Erfinder:
(74) Vertreter: Rehmann, Thorsten

(56) Entgegenhaltungen:
- WO-A-01/48333
- WO-A-02/04206
- WO-A-02/45955
- DE-A1- 19 903 912
- DE-C1- 19 952 021
- DE-U1- 29 602 329
- US-A1- 2002 160 114

## Beschreibung

Die Erfindung betrifft eine Holzfaserplatte, insbesondere ein Fussbodenpaneel bestehend aus einer HDF-Trägerplatte mit einer Oberseite und einer Unterseite, wobei direkt auf die Oberseite ein Dekor, vorzugsweise ein Holz- oder Fliesendekor aufgedruckt ist, und ein Verfahren zur Herstellung einer solchen Holzfaserplatte.

Eine solche Holzfaserplatte ist beispielsweise aus der WO 01/48333 A1 bekannt. Das unmittelbar auf die Oberseite mittels eines Tintenstrahldruckers aufgedruckte Dekor wird von einer Verschleißschutzschicht abgedeckt, die aus einem UV-härtenden Acryllack besteht, der in einzelnen Schichten aufgetragen wird, wobei jede einzelne Schicht teilweise gehärtet wird, bevor die nächste Schicht aufgetragen wird.

Fussbodenpaneele mit einer Holzfaser-Trägerplatte werden üblicherweise als Laminatpaneele bezeichnet und sind seit vielen Jahren zur Substitution von Parkett im Handel. Das gewünschte Dekor (Parkett, Holzmaserung, Fliesen, usw.) wird vielfach auf eine Papierbahn aufgedruckt, die anschließend mit Harz beschichtet und auf eine Rolle aufgerollt wird. Die so vorgefertigte Dekorbahn wird bei dem Fussbodenhersteller auf die Trägerplatte aufgelegt und verpresst. Durch das Aufdrucken des Dekors auf die Papierbahn, das spätere Versiegeln der Papierbahn mit Kunstharz und das anschließende Verbinden der Dekorschicht mit der Trägerplatte durch Druck und Temperatur verändert sich die Papierbahn in ihren Abmessungen. Der Fachmann spricht davon, dass das Papier wächst. Das Papier wächst sowohl in der Länge (Längenwachstum) als auch in der Breite (Breitenwachstum). Wenn diese Dekorplatte nun zu einzelnen Paneelen zugeschnitten werden soll, müssen das Längen- und Breitenwachstum berücksichtigt werden, weil anderenfalls eine ungleiche Dekorverteilung auf den einzelnen Paneelen vorhanden wäre. Diese hätte zur Folge, dass der aus einer ungleich verteilten Dekorschicht zusammengesetzte Fussboden an den Verbindungskanten der Paneele Dekorsprünge aufweist. Selbst wenn solche Dekorsprünge nur wenige Millimeter betragen, fallen sie bei der Betrachtung auf, was den ästhetischen Eindruck negativ beeinflusst und damit die Qualität des ausgelegten Fussbodens mindert.

Um qualitätsgerecht produzieren zu können, muss das Papierwachstum erfasst und die Säge, die die Paneele aus der Trägerplatte zurecht sägt, entsprechend eingestellt werden. Eine manuelle Einstellung ist sehr zeitaufwendig. Die DE 100 19 054 C1 beschreibt ein Verfahren zum Zuschneiden von Paneelen aus einer Trägerplatte, mit dem die Säge automatisch an das Papierwachstum angepasst werden kann. Hierzu sind Kameras notwendig, die die Ist-Lage definierter Dekorpunkte ermitteln. Die Ist-Lage wird dann mit der Soll-Lage verglichen und die Abweichung des Breiten- oder Längenmaßes ermittelt, so dass die Säge entsprechend eingestellt werden kann.

Um den Zuschnitt zu optimieren muss also ein recht hoher Aufwand getrieben werden, der die Herstellung hochwertiger Paneele verteuert. Um die Optik des Laminatpaneels der Optik eines Naturholzpaneels weiter anzupassen kann in der Presse in der die Dekorschicht mit der Trägerplatte verpresst wird, eine ein Relief aufweisende Matrize vorgesehen sein, die ein der Holzmaserung entsprechendes Relief in die Kunstharzschicht prägt. Da das Papierwachstum nicht reproduzierbar ist, ist es nicht möglich, das Relief vollständig in Übereinstimmung mit dem Dekor zu bringen. Die Fugen eines Fliesenspiegels können, da hier Abweichungen sofort sichtbar wären, nicht in die Oberfläche geprägt werden.

Aus der DE 199 03 912 A1 ist ein Verfahren bekannt, bei dem die farbgebende Schicht, die es verhindert, dass das Material der Trägerplatte an der Oberseite durchscheint, nicht mehr auf die Dekorschicht aufgetragen, sondern direkt auf die Trägerschicht aufgebracht wird.

Die WO 02/45955 A2 offenbart eine Verschleißschutzschicht auf Basis von Kunstharz in die Hartstoffpartikel mit einer Härte nach Mohs von mindestens 6 eingelagert sind und zusätzlich hierzu im Wesentlichen schneidkantenfreie, runde Feststoffpartikel mit einer Härte nach Mohs von mindestens 5 eingelagert sind, wobei die Korngrößenverteilung der runden Feststoffpartikel mindestens beim kleinsten Korndurchmesser der Hartstoffpartikel beginnt und maximal beim fünffachen Wert des größten Hartstoffpartikeldurchmessers endet.

US 2002/0014047 A1 offenbart Fußbodenpaneele, auf deren Oberseite eine Dekorschicht aufgebracht ist, die von einer transparenten Schicht abgedeckt wird. Die Dekorschicht kann aus Papier oder einem anderen Material bestehen. Die transparente Deckschicht kann aus einer dünnen, transparenten Papierschicht bestehen.

Die DE 296 02 329 U1 offenbart ein als Bodenbelag verwendbares Flächenelement, bei dem auf eine Holzwerkstoffplatte ein Holzfurnier aufgebracht ist, das von einer Lackierung, die hochfeste abriebshemmende Partikel enthält, abgedeckt wird. Die Partikel können Korund- oder Diamantpartikel sein. Die Lackierung kann aus mehreren Schichten aufgebaut sein.

Die DE 199 52 021 C1 beschreibt eine Vorrichtung zur Beschichtung von profiliertem Langmaterial, zum Beispiel Leisten. Diese Leisten können in einer Lackiervorrichtung lackiert werden.

Von dieser Problemstellung ausgehend soll die eingangs beschriebene Holzfaserplatte verbessert werden.

Die Problemlösung erfolgt bei einer gattungsgemäßen Holzfaserplatte dadurch, dass die unmittelbar auf das Dekor aufgebrachte Kunstharzschicht Korundpartikel zur Erhöhung der Abriebfestigkeit aufweist und dadurch, dass keine Papierschichten enthalten sind.

Das Dekor kann auch zusätzlich auf die Unterseite der Trägerplatte aufgedruckt und mit mindestens einer Schicht aus einem transparenten Kunstharz abgedeckt sein. Gegebenenfalls können die Unterseite und/oder die Oberseite der Trägerplatte mit einem zu dem Dekor korrespondierenden Relief versehen sein, das in die Kunstharzschicht gepresst wird.

Beim Verpressen der Kunstharzschicht verändert das Dekor sich weder in der Länge noch in der Breite. Die Säge, mit der später Paneele zugeschnitten werden, kann voreingestellt sein. In die Kunstharzschicht der erfindungsgemäß ausgebildeten Platte können selbst filigranste Reliefe geprägt werden, die exakt mit dem Dekor übereinstimmen. Die Herstellkosten qualitativ hochwertiger Paneele werden deutlich reduziert. Ein weiterer Einspareffekt entsteht dadurch, dass die Papierschicht entfällt.

Ein Verfahren zur Herstellung der erfindungsgemäßen Holzfaserplatte zeichnet sich durch folgende Schritte aus:
a) auf eine oder zwei Seiten der Platte wird direkt ein Dekor, vorzugsweise ein Holz- oder Fliesendekor aufgedruckt;
b) mit einer Rasterwalze werden auf der mit dem Dekor (Oberseite) und der dieser gegenüberliegenden (Unterseite) Seite mindestens zwei Kunstharzschichten aufgestrichen, wobei die erste auf das Dekor aufgebrachte Kunstharz-Schicht mit Korundpartikeln versehen ist;
c) die Kunstharzschichten werden in einer KT-Presse in bekannter Weise mit der Platte verpresst.

Da keine Papierschichten verwendet werden, sind die so hergestellten Platten vor Verzug, der durch die Eigenzugkraft der Papiere entstehen könnte, sicher. In Folge der dünnen Schichten können kurze Presszeiten realisiert werden.

Anstatt aus HDF (High Density Fiberboard) kann die Trägerplatte auch aus MDF (Medium Density Fiberboard) oder auch eine herkömmliche Spanplatte mit einer entsprechend feingestreuten Deckschicht sein, aus der dann beispielsweise kleinere Platten, die für den Möbelbau Verwendung finden, gesägt werden können.

Derartig hergestellte Platten können auch als Fussböden Verwendung finden, in dem sie zu Paneele in zu dem Dekor passenden Format gesägt werden.

## Patentansprüche

1. Holzfaserplatte mit einer Trägerplatte, insbesondere Fußbodenpaneel bestehend aus einer HDF-Trägerplatte, mit einer Oberseite und einer Unterseite, wobei direkt auf die Oberseite ein Dekor, vorzugsweise ein Holz- oder Fliesendekor aufgedruckt ist, wobei das Dekor von zwei verpressten Schichten aus einem transparenten Kunstharz abgedeckt ist, **dadurch gekennzeichnet, dass** die unmittelbar auf das Dekor aufgebrachte Schicht Korundpartikel zur Erhöhung der Abriebfestigkeit aufweist, und dass keine Papierschichten enthalten sind.

2. Holzfaserplatte nach Anspruch 1, ***dadurch gekennzeichnet, dass*** das Dekor auch auf die Unterseite der Trägerplatte aufgedruckt ist.

3. Holzfaserplatte nach Anspruch 1 oder 2, ***dadurch gekennzeichnet,* dass** die Oberseite ein zu dem Dekor korrespondierendes Relief aufweist.

4. Holzfaserplatte nach Anspruch 3, **dadurch gekennzeichnet, dass** auch die Unterseite ein zu dem Dekor korrespondierendes Relief aufweist.

5. Verfahren zur Herstellung einer Holzfaserplatte nach Anspruch 1 oder 2, **gekennzeichnet durch** folgende Schritte:
a) auf eine oder zwei Seiten der Platte wird direkt ein Dekor, vorzugsweise ein Holz- oder Fliesendekor aufgedruckt;
b) mit einer Rasterwalze werden auf der mit dem Dekor (Oberseite) und der dieser gegenüberliegenden (Unterseite) Seite mindestens zwei Kunstharz-Schichten, vorzugsweise Melamin- oder Harnstoffharz-Schichten aufgestrichen, wobei die erste auf das Dekor aufgebrachte Kunstharz-Schicht mit Korundpartikeln versehen ist;
c) die Kunstharz-Schichten werden in einer KT-Presse in bekannter Weise mit der Platte verpresst.

6. Verfahren nach Anspruch 5, **dadurch gekennzeichnet, dass** in der KT-Presse ein zu dem auf der Oberseite vorgesehenen Dekor korrespondierendes Relief in die Kunstharz-Schicht geprägt wird.

7. Verfahren nach Anspruch 6, **dadurch gekennzeichnet, dass** auch ein zu dem auf der Unterseite vorgesehenen Dekor korrespondierendes Relief geprägt wird.

8. Verfahren nach einem der Ansprüche 5 bis **7, dadurch gekennzeichnet, *dass*** aus der Holzfaserplatte Fußbodenpaneele gesägt werden.

## Claims

1. Wood fiber board with a substrate, especially floor paneling, consisting of a HDF substrate, with a top side and a bottom side, wherein a decoration, preferably a wood or tile decoration, is imprinted directly on the top side, wherein the decoration is covered by two pressed layers of a transparent synthetic resin, **characterized in that** the layer applied directly to the decoration contains corundum particles to increase the abrasion resistance, and no paper layers are contained.

2. Wood fiber board according to Claim 1, **characterized in that** the decoration is also imprinted on the bottom side of the substrate.

3. Wood fiber board according to Claim 1 or 2, **characterized in that** the top side has a relief corresponding to the decoration.

4. Wood fiber board according to Claim 3, **characterized in that** the bottom side also has a relief corresponding to the decoration.

5. Method for production of a wood fiber board according to Claim 1 or 2, **characterized by** the following steps:
a) a decoration is printed directly onto one or two sides of the board, preferably a wood or tile decoration;
b) with a raster roller, at least two synthetic resin layers, preferably melamine or urea resin layers, are applied to the side with the decoration (top side) and the opposite side (bottom side), while the first synthetic resin layer applied to the decoration is provided with corundum particles;
c) the synthetic resin layers are pressed together with the board in a short-cycle press in familiar fashion.

6. Method according to Claim 5, **characterized in that** a relief corresponding to the decoration provided on the top side is embossed in the synthetic resin layer in the short-cycle press.

7. Method according to Claim 6, **characterized in that** a relief corresponding to the decoration provided on the bottom side is also embossed.

8. Method according to one of Claims 5 to 7, **characterized in that** flooring panels are cut out from the wood fiber board.

## Revendications

1. Plaque à base de fibres de bois comprenant une plaque de support, en particulier un panneau de plancher constitué d'une plaque de support en HDF, comprenant une face supérieure et une face inférieure, un décor, de préférence un décor imitation carrelage ou bois, étant surimprimé directement sur la face supérieure, le décor étant couvert de deux couches comprimées composées d'une résine synthétique transparente, **caractérisée en ce que** la couche appliquée directement sur le décor présente des particules de corindon pour augmenter la résistance à l'abrasion, et **en ce qu'**aucune couche de papier n'est incluse.

2. Plaque à base de fibres de bois selon la revendication 1, **caractérisée en ce que** le décor est surimprimé sur la face inférieure de la plaque de support.

3. Plaque à base de fibres de bois selon la revendication 1 ou 2, **caractérisée en ce que** la face supérieure présente un relief correspondant au décor.

4. Plaque à base de fibres de bois selon la revendication 3, **caractérisée en ce que** la face inférieure présente un relief correspondant au décor.

5. Procédé pour fabriquer une plaque à base de fibres de bois selon la revendication 1 ou 2, **caractérisé par** les étapes suivantes :
a) un décor, de préférence un décor imitation carrelage ou bois est surimprimé directement sur une ou deux faces de la plaque ;
b) au moins deux couches de résine synthétique, de préférence des couches de résine à base d'urée ou de mélamine, sont étendues avec un rouleau tramé sur la face comprenant le décor (face supérieure) et la face opposée (face inférieure) à celle-ci, la couche de résine synthétique étendue en premier sur le décor étant prévue avec des particules de corindon ;
c) les couches de résine synthétique sont comprimées avec la plaque dans une presse à cadences rapides de manière connue.

6. Procédé selon la revendication 5, **caractérisé en ce qu**'un relief correspondant au décor prévu sur la face supérieure est estampé dans la couche de résine synthétique dans la presse à cadences rapides.

7. Procédé selon la revendication 6, **caractérisé en ce qu'**un relief correspondant au décor prévu sur la face inférieure est également estampé.

8. Procédé selon l'une des revendications 5 à 7, **caractérisé en ce que** des panneaux de plancher sont sciés à partir des plaques à base de fibres de bois.
